(19) Europäisches Patentamt / European Patent Office / Office européen des brevets

(11) **EP 3 622 348 B1**

(12) **EUROPEAN PATENT SPECIFICATION**

(45) Date of publication and mention
of the grant of the patent:
**10.05.2023   Bulletin 2023/19**

(21) Application number: **18802728.8**

(22) Date of filing: **16.05.2018**

(51) International Patent Classification (IPC):
**G02F 1/1347** (2006.01)     **G02F 1/1335** (2006.01)
**G02B 5/02** (2006.01)     **G02B 30/52** (2020.01)

(52) Cooperative Patent Classification (CPC):
**G02B 5/0221; G02B 5/0268; G02B 5/0278;**
**G02B 5/0294; G02B 30/52; G02F 1/1335;**
**H04N 13/307;** G02B 5/0257; G02B 27/0927;
G02B 27/60; G02F 1/1347

(86) International application number:
**PCT/US2018/032910**

(87) International publication number:
**WO 2018/213407 (22.11.2018 Gazette 2018/47)**

(54) **METHOD AND SYSTEM FOR REDUCING FRESNEL DEPOLARIZATION TO IMPROVE IMAGE CONTRAST IN DISPLAY SYSTEM INCLUDING MULTIPLE DISPLAYS**

VERFAHREN UND SYSTEM ZUR VERRINGERUNG DER FRESNEL-DEPOLARISATION ZUR VERBESSERUNG DES BILDKONTRASTES IN EINEM ANZEIGESYSTEM MIT MEHREREN ANZEIGEN

PROCÉDÉ ET SYSTÈME DE RÉDUCTION DE DÉPOLARISATION DE FRESNEL POUR AMÉLIORER LE CONTRASTE D'IMAGE DANS UN SYSTÈME D'AFFICHAGE COMPRENANT DE MULTIPLES AFFICHAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **17.05.2017   US 201715597587**

(43) Date of publication of application:
**18.03.2020   Bulletin 2020/12**

(73) Proprietor: **Aptiv Technologies Limited**
**St. Michael (BB)**

(72) Inventor: **NEWTON, John D.**
**Oraki, Auckland 1071 (NZ)**

(74) Representative: **Manitz Finsterwald**
**Patent- und Rechtsanwaltspartnerschaft mbB**
**Martin-Greif-Strasse 1**
**80336 München (DE)**

(56) References cited:
| | |
|---|---|
| **US-A- 5 835 176** | **US-A1- 2007 242 186** |
| **US-A1- 2015 152 294** | **US-A1- 2015 323 805** |
| **US-A1- 2016 012 630** | **US-A1- 2017 124 931** |
| **US-A1- 2017 131 558** | |

**Description**

FIELD OF THE INVENTION

This invention relates to a multi-display system (e.g., a display including multiple display panels/display layers), where at least first and second displays (e.g., display panels or display layers) are arranged substantially parallel to each other in order to display three-dimensional (3D) features to a viewer(s). Thus, this invention relates generally to displays and, more particularly, to display systems and methods for displaying three-dimensional features.

BACKGROUND AND SUMMARY OF THE INVENTION

Traditionally, displays present information in two dimensions. Images displayed by such displays are planar images that lack depth information. Because people observe the world in three-dimensions, there have been efforts to provide displays that can display objects in three-dimensions. For example, stereo displays convey depth information by displaying offset images that are displayed separately to the left and right eye. When an observer views these planar images they are combined in the brain to give a perception of depth. However, such systems are complex and require increased resolution and processor computation power to provide a realistic perception of the displayed objects.

Multi-component displays including multiple display screens in a stacked arrangement have been developed to display real depth. Each display screen may display its own image to provide visual depth due to the physical displacement of the display screens. For example, multi-display systems are disclosed in prior art documents US 2015 / 0 323 805 A1 and US 2016 / 0 012 630. US 2017 / 0 131 558 A1 discloses a method and a system using refractive beam mapper having square element profiles to reduce Moiré interference in a display system including multiple displays. US 2015 / 0 152 294 A1 describes heat-activatable siloxane-based adhesives.

When first and second displays or display layers are conventionally stacked on each other in a multi-display system, moire interference occurs. The moire interference is caused by interactions between the color filters within the layers when projected onto a viewer's retina. For example, when green color filters overlap, light is transmitted making for a comparative bright patch. When a green filter is over say a red filter, not as much light will be transmitted making for a dark region. Since the rear and front displays or display layers have slightly different sizes when projected onto the retina, the pixels will slowly change from being in phase to out of phase. This has the effect of producing dark and bright bands otherwise known as moire interference.

Certain example embodiments of the instant invention provide solution(s) that make moiré interference in MLD systems vanish or substantially vanish, but without significantly sacrificing the rear display resolution and contrast. In certain example embodiments of this invention, the MLD system includes first and second displays. A refractive beam mapper (RBM) may be utilized in order to reduce or eliminate moire interference.

In some example embodiments of this invention, there is provided a display device comprising: a first display in a first plane for displaying a first image; a second display in a second plane for displaying a second image, wherein said first and second planes are approximately parallel to each other; and a beam mapping element (e.g., refractive beam mapper) located between the first and second displays and comprising a plurality of microlenses configured to direct incident rays from the second display in a pseudo random manner through sub-pixels of the first display and toward a viewer.

A refractive beam mapper may or may not be used in combination with other techniques for reducing moire interference (e.g., color filter offset or dissimilar color filter patterns on the respective displays, diffuser techniques, and/or subpixel compression) in various embodiments of this invention.

Certain example embodiments of the present invention are configured to reduce Fresnel depolarization and thereby improve image contrast.

In an example embodiment of this invention, there is provided a multi-layered display device comprising: a first display layer in a first plane for displaying a first image; a second display layer in a second plane for displaying a second image, wherein said first and second planes are approximately parallel to each other; a refractive element located on a top surface of the first display layer or between the first and second display layers; and an index matching material between the first and second displays, the index matching material having a first refraction index that is higher than a refractive index of air and is from about 1.40 to 1.65. Each display layer is an LCD device. The index matching material may occupy the entire space, or substantially the entire space, between the first and second display layers. The first and/or display layer may be a liquid crystal display that includes a liquid crystal layer provided between at least first and second glass substrates, at least one of the glass substrates of the liquid crystal display having a second refractive index, and wherein the first refractive index of said index matching material does not differ from the second refractive index by more than 0.15, more preferably does not differ from the second refractive index by more than 0.10. The second refractive index may be from about 1.50 to 1.53, and the first refractive index may be at least 1.40 or at least 1.45. The index matching material may be free of, or substantially free of, birefringence. For example, the index matching material may consists essentially of, or comprise, a silane or siloxane such as polydimethylsiloxane (PDMS). The refractive element (e.g., microlens array) may directly contact the index matching material to reduce Fresnel depolarization.

BRIEF DESCRIPTION OF THE DRAWINGS

This patent or application file contains at least one drawing executed in color. Copies of this patent or patent application publication with color drawing(s) will be provided by the Office upon request and payment of the necessary fee.

These and other features and advantages may be better and more completely understood by reference to the following detailed description of exemplary illustrative embodiments in conjunction with the drawings, of which:

FIGURE 1 is a top plan view of color filters of a liquid crystal display (LCD) where pixels are the same color in each column (or row);

FIGURE 2 is a top plan view of color filters of another liquid crystal display (LCD) where pixels are the same color in each column (or row);

FIGURE 3 is a top plan view of a MLD system resulting from the combination of LCDs of Figs. 1 and 2 where the LCD of Figs. 1 and 2 are overlapped with each other in a stacked relationship, which results in moire interference;

FIGURE 4 is a schematic diagram illustrating pseudo random mapping of pixels of a rear display to pixels in a front display of a MLD system;

FIGURE 5 is a schematic diagram illustrating a mapping element that may be used in connection with the pseudo random mapping of Fig. 4 in order to reduce moire interference (this may or may not be used in combination with sub-pixel compression embodiments in various embodiments of this invention);

FIGURE 6 is a schematic side cross sectional view of a MLD according to an example embodiment of this invention, which may be used with the embodiments of any of the figures herein;

FIGURE 7 illustrates a bandwidth limited implementation of a RBM having refractive optics;

FIGURE 8 is an intensity profile exhibiting improved super-Lorentzian characteristics over a range of angles with p=40 and lens feature sizes less than or equal to 160 microns;

FIGURE 9 is a graph illustrating that bigger microlenses will typically have better anti-moiré diffuser profiles;

FIGURE 10 is a schematic diagram illustrating an example fabrication processes for a RBM that may be used in various embodiments of this invention;

FIGURE 11 illustrates a microlens according to an example embodiment of this invention;

FIGURE 12 is an angle of incidence vs. transmission coefficient graph that shows curves illustrating the transmission coefficient for S and P waves vs. angle of incidence;

FIGURE 13 is a graph showing system contrast (contrast($\theta$i, n1, n2, N), wherein $\theta$i is the angle of incidence, n1 is the refractive index of the material between LCDs, n2 is the refractive index of glass, and N is the number of interfaces;

FIGURES 14-16 are side cross sectional views of a MLD system according to embodiments of this invention where a moire reducing element (e.g., RBM) is placed in various locations of a stack in a MLD system according to various embodiments of this invention (this may or may not be used in combination with sub-pixel compression in various embodiments of this invention);

FIGURE 17 illustrates reflection and refraction of incident light moving from a medium of a first refractive index into a second medium with a second refractive index;

FIGURE 18 illustrates an example plane of incidence;

FIGURE 19 illustrates transmitted light Ts and Tp for different mediums;

FIGURE 20 (FIGURES 20A and 20B) illustrates differing attenuation of s-polarization and p-polarization rays resulting in a rotation of the polarization axis;

FIGURE 21 illustrates the plane of incidence for any ray entering the observer's eye formed by the three points A, B and C, where A is the closest point from the eye on the LCD surface, B the ray exit point on the LCD and C the eye;

FIGURE 22 illustrates the rotation change due to the Fresnel attenuation to the s-polarization wave in a case in which the plane of incidence is at 45 degrees; and

FIGURE 23 shows the effective contrast ratio due to the Fresnel effects alone with different amount of layers and refractive index materials of 1.0 (air) up to 1.4.

DETAILED DESCRIPTION

This invention relates to a multi-display system (e.g., a display including multiple display panels), where at least first and second displays (e.g., display panels or display layers) are arranged substantially parallel to each other in order to display three-dimensional (3D) features to a viewer(s). The displays may be flat or curved in different embodiments. Thus, embodiments of this invention relate generally to displays and, more particularly, to display systems and methods for displaying three-dimensional features. MLDs according to example embodiments of this invention may be used, for example, as displays in vehicle dashes in order to provide 3D images (e.g., for speedometers, vehicle gauges, vehicle navigation displays, etc.).

The color moiré interference problem is caused by the pattern regularity of both liquid crystal display (LCD) color filter arrays as, for example, RGB pixels are aligned into RGB columns in both displays of a MLD system. Color moiré interference may be largely prevalent in the horizontal direction.

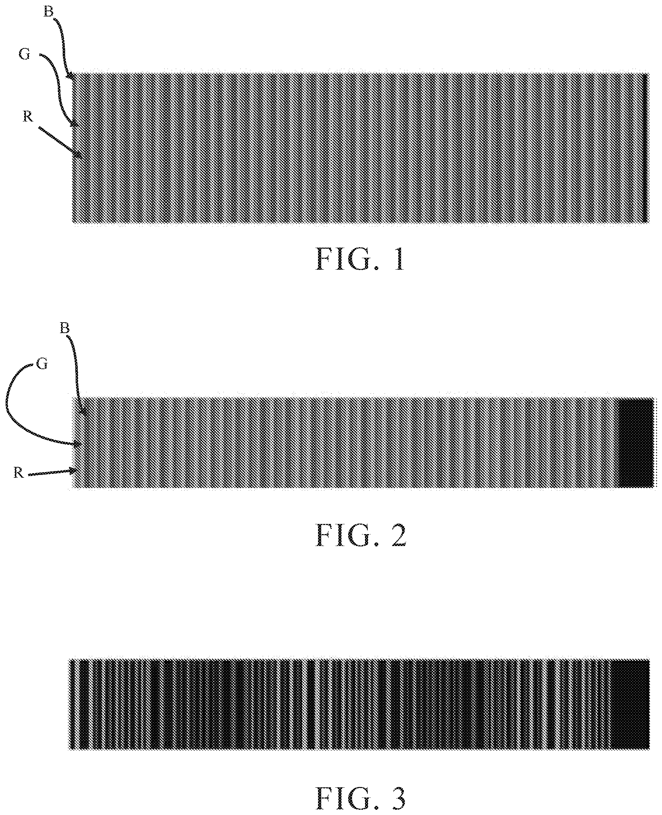

Figs. 1-3 illustrate an arrangement in a MLD system which experiences moire interference. Fig. 1 is a top plan view of color filters/pixels of a first liquid crystal display (LCD) where pixels or subpixels are the same color in each column. In particular, Fig. 1 shows a LCD having a conventional red-green-blue (R-G-B) repeating pattern or arrangement, wherein the pixels or subpixels are the same color in each column. Starting from the left side of Fig. 1, the color filter stripes are arranged in vertical lines in a BGR order, and this BGR order repeats itself over and over moving from left to right across the display of Fig. 1. Thus, the pattern in the display or display layer of Fig. 1 includes blue columns, green columns, and red columns. The green (G) columns are located between blue (B) and red (R) colored columns. A subpixel may be considered the area of a given pixel electrode in an area of a particular color filter. For instance, R, G and B subpixels may make up a pixel. Alternatively, a subpixel may be considered to be a pixel. FIG. 1 is shown without color mask rotation. Conventionally, both panels of a multiple layered display (MLD) may be configured similarly with such a R-G-B arrangement. The repeatable pattern may be R-G-B, or R-B-G, or any other combination.

Likewise, Fig. 2 is a top plan view of color filters/pixels/subpixels of a second LCD where pixels or subpixels are also the same color in each column. Starting from the left side of Fig. 2, the color filter stripes are arranged in vertical lines in a RGB order, and this order repeats itself over and over moving from left to right across Fig. 2. The repeatable pattern may be R-G-B, or R-B-G, or any other combination involving these colors. As shown in Fig. 2, like in Fig. 1, green (G) columns are located between blue (B) and red (R) colored columns.

Fig. 3 is a top plan view of a MLD system resulting from the combination of the LCDs of Figs. 1 and 2, one on top of the other in a stacked overlapping relationship in a MLD system. Fig. 3 shows the mixing of the color filter and pixel/subpixel patterns shown in Figs. 1 and 2. In particular, Fig. 3 illustrates the emergence of moiré interference given an instance where both LCDs have a similar R-G-B column arrangement, where the pixels are the same color in each column. For example, when the Fig. 2 pattern overlaps the Fig. 1 pattern in a MLD system, green color filter lines overlap (e.g., see the left portion of Fig. 3), and light in this green filter line overlap area is transmitted through the MLD system making for a comparatively bright green patch. When a green filter overlaps a red filter for instance (or a blue filter is over a red filter), not as much light will be transmitted making for a dark region (e.g., see the dark regions surrounding the green stripe at the left side of Fig. 3). Since the rear and front displays or display layers have slightly different sizes when projected onto a retina, the pixels will slowly change from being in phase to out of phase. This has the effect of producing dark and bright bands otherwise known as moire interference.

Example embodiments of this invention address, and reduce or solve, this moire interference problem. Certain example embodiments of the instant invention provide solution(s) that make moiré interference in MLD systems vanish or substantially vanish, but without significantly sacrificing the rear display resolution and contrast.

In certain embodiments of this invention, a beam mapping element such as diffractive optical element (DOE) or a refractive beam mapper (RBM) composed of many micro-lenses may be used to reduce moire interference. When an RBM is used, pseudo random mapping may be provided in order to not introduce extra moiré effects. The divergence of individual beams may be limited so that any point on the rear LCD is not diverted more than one pixel distance from a straight line by the time it reaches the front LCD in certain example embodiments. One may also laminate such a beam mapping element to the front display and optically match the media between the two LCDs with a non-birefringent material in certain example embodiments, and such embodiments may or may not be used in combination with subpixel compression techniques discussed herein.

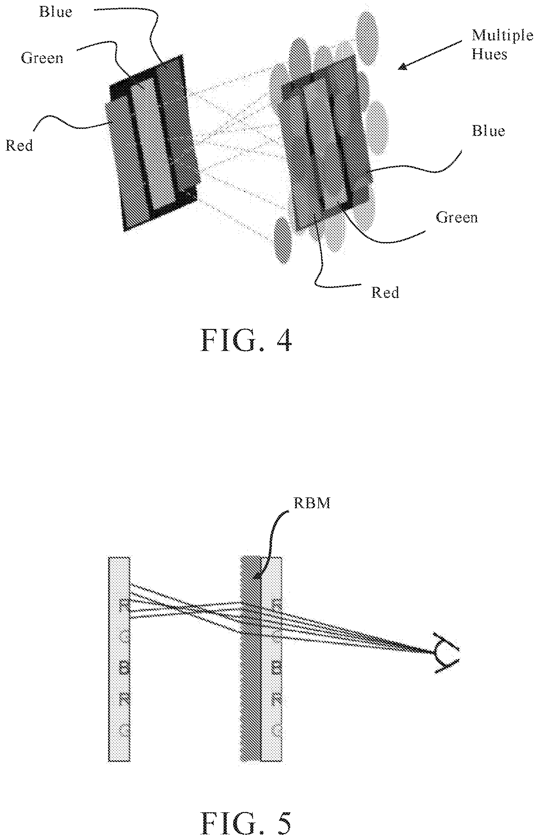

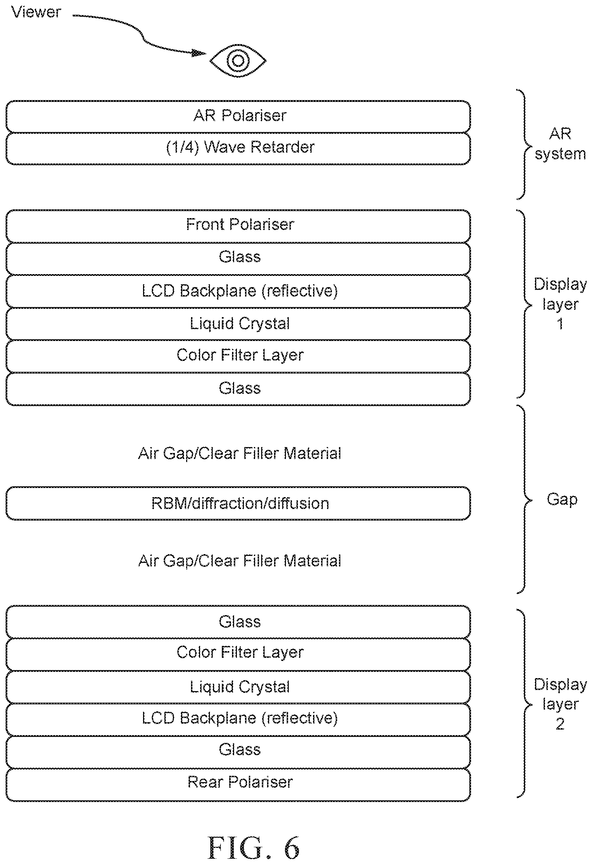

Displays or display layers herein (e.g., see front display 1 and rear display 2 in Fig. 6, or the corresponding displays in Figs. 4, 5, 7, 14-16) are LCDs. Twisted nematic (TN) LCDs may follow a fairly generic pixel layout, such as a square divided into three portions running horizontally (or vertically) with red green and blue sub-pixels. The sub-pixels may be separated by a black mask in the horizontal and vertical directions. There is often a square protrusion in the corner of the sub-pixel to cover the drive transistor. There are several different types of pixel technology that enable wide screen viewing and temporal performance required for modern desktop monitors and televisions. Embodiments of the present invention are compatible with all of these LCDs, since the backplanes are designed to follow the basic RGB stripe pixel layout. As such, the backplane layout required for each pixel does not need to change. For example, pixel type displays by manufacturer include: Panasonic (IPS Pro), LG Display (H-IPS & P-IPS), Hannstar (S-IPS), AU Optronics (A-MVA), Samsung (AFFS), S-LCD (S-PVA), and Sharp Corporation (ASV and MVA). In certain comparative examples, both displays or display layers may be OLEDs, or one display may be an OLED and the other an LCD. Note that in OLEDs, respective sub-pixels or pixels would be filled with red, green, and blue material as the color filter material (as opposed to having LCD type color filters).

Fig. 6 illustrates a MLD according to an example embodiment of this invention, in which the stacked overlapping layers/displays of any of the figures herein may be provided and utilized. For example, the displays shown in any of Figs. 4-5 and 14-16 may be the front 1 and rear 2 displays in Fig. 6, respectively. The first display or display layer of the MLD may be element 1 (or 2), and the second display or display layer of the MLD may be element 2 (or 1). Display or display layer 2 is closest to the backlight of the MLD, and it may be desirable to have its backplane facing the backlight system to recycle light that may pass through row drivers, column drivers, transistors, and storage capacitance lines into the backlight. A two polarizer configuration may be used, as shown in the figure, and gaps may be designed to include air or material having birefringence designed to maintain black state of the display when desired. The gap may include material having a refractive index matched closely to glass or the layers on either side to reduce internal reflection and/or depolarization effects. For the front display or display layer 1, its backplane may be oriented opposite to that of display or display layer 2. In particular, for the front display 1 its backplane may be oriented to face the viewer to reduce internal reflections. Thus, it can be seen in Fig. 6 that the color filter layers (each of which may be made up of one or more layers) of the respective displays 1 and 2 may be designed to face each other, with no liquid crystal layer from either display being located between the color filter layers of the first and second displays in certain example embodiments. In certain example embodiments, to reduce external reflections of ambient light, there may be provided an antireflective system at the front such as that shown in Fig. 6 made up of quarter wave retarder and an antireflective (AR) polarizer, so that ambient light that would normally be reflected would undergo a quarter wave rotation on the first pass through the AR polarizer, is reflected by the backplane elements, undergoes a second rotation through the quarter wavelength retarder. By the time it goes through this second rotation, it is substantially orthogonal to the transmission axis of the AR polarizer and thus will be substantially absorbed. Additionally, black mask (BM) or other non-reflective material may be added behind the conductive traces of the displays to reduce reflections. Additionally, antireflective (AR) coating(s) may be applied to the interior surfaces in certain example embodiments of this invention. The AR coating may, for example, operate in the visible range, e.g., moth eye, single layer interference, multi-layer interference, etc.

Regarding a refractive beam mapper (RBM), such a beam mapping element is made up of, or includes, a plurality of micro☐ lenses and may be used as a stand-alone element for reducing moire interference via pseudo random mapping (e.g., see Figs. 4-6 and 14-16). In certain example pseudo random mapping embodiments (e.g., Figs. 4-5), each of the refractive micro☐lenses of an RBM may be designed to direct incident rays from the back LCD 2 to an observer in a defined path, each ray passing through a different sub☐pixel in the front LCD 1 according to a pseudo random mapping. For example, FIG. 4 shows the pseudo random mapping of rear subpixels or pixels of rear display 2 to subpixels or pixels in the front display 1 (the rear display is the left-most display in Fig. 4). The pseudo random mapping is used in order to not introduce extra moiré effects, and can reduce moire interference. In an example embodiment, the divergence of these individual beams is limited so that light from any pixel or subpixel of the rear LCD is not diverted more than one pixel or subpixel distance from a straight line on the front display. Optionally, the RBM may be laminated to the top LCD 1 (see Figs. 5, 14 and 16), and optionally matched or substantially matched optically to media between the two LCDs with a nonDbirefringent material. However, in other embodiments, the refractive beam mapper can be placed anywhere within the LCD stack. Fig. 5 for instance shows the beam mapping element (e.g., RBM including a micro-lens array) located between the front and rear LCDs and laminated to an interior side of the front display.

In certain example embodiments, the micro-lenses of an RBM may be fabricated using gray-scale lithography, to produce arbitrary surface structures in a micro-lens format. Each lens element may configured for directing light in a controlled direction enabling arbitrary and asymmetric scattering angles as shown in Figs. 4-5. It is possible to make a master to replicate the RBM using a variety of high-volume manufacturing processes and materials as in the replication of micro-lens features, profile slope angle is more important than profile height. Figs. 4-5 show how the refractive beam mapper superimposes rays from the back LCD 2 onto the front LCD 1 from an observer's point of view. The beam paths are mapped in a pseudo random fashion so not to introduce other artifacts such as extra moiré. The underlying LCD structure 2 is randomized and thus incapable of generating significant moiré interference with the top LCD 1.

Alternatively, a diffuser may instead be used for the construction of a moiré suppression element. While the process can be adapted to make a refractive beam mapper, engineered diffusers can also be used as optimal diffuser elements for more reduction. Diffusers are not as desirable as a refractive beam element.

The refractive beam mapper may exhibit various features. For example, an RBM may exhibit achromatic performance. In addition, an RBM may exhibit arbitrary/asymmetric scattering angles. Further, an RBM may exhibit controlled intensity distribution patterns (e.g., circular, square, rectangular, elliptical, line, ring, etc.). Also, an RBM may exhibit controlled intensity profiles (e.g., flat top, Gaussian, batwing, custom, etc.). An RBM may also exhibit high optical transmission efficiency (e.g., 90 percent). Additionally, an RBM may exhibit the preservation of polarization. An RBM may be of or include various materials, such as polymer injection molding, hot embossed polymers, polymer-on-glass components, etc.

Moiré interference in MLD is commonly suppressed by adding a diffuser element (as opposed to a beam mapping element) between the back LCD and the observer so that the pixel structure in the back LCD is blurred. The greater the diffuser spread the less the moiré but correspondingly the observed resolution of the back LCD is reduced. This becomes an optimization problem and can be described as an image quality cost function IQC which can range from 0 to 4, 0 being perfect and 4 being worst for both moiré and blurring. Factors to consider include contrast = (max-min)/ (max+min) where (1 is best, 0 is worst); crosstalk = 1 - contrast of alternating black and white lines (range 0: 1); moiré = contrast of moiré for constant white pattern on both LCD's (range 0: 1); IQC = moiré_X + moiré_Y + crosstalk_X + crosstalk _Y (i.e. range is 0 : 4), the lower this value, the better. Normally the cost function would have a realistic maximum of approximately 2 as shown by the following limits: no diffuser : moire _X + moire _Y = 2, crosstalk_X + crosstalk_Y= 0; and strong diffuser : moire _X + moire _Y = 0, crosstalk_X + crosstalk_Y= 2.

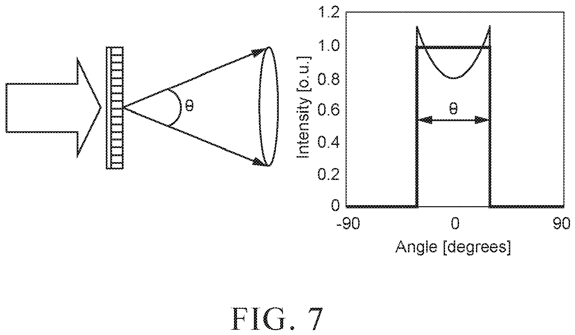

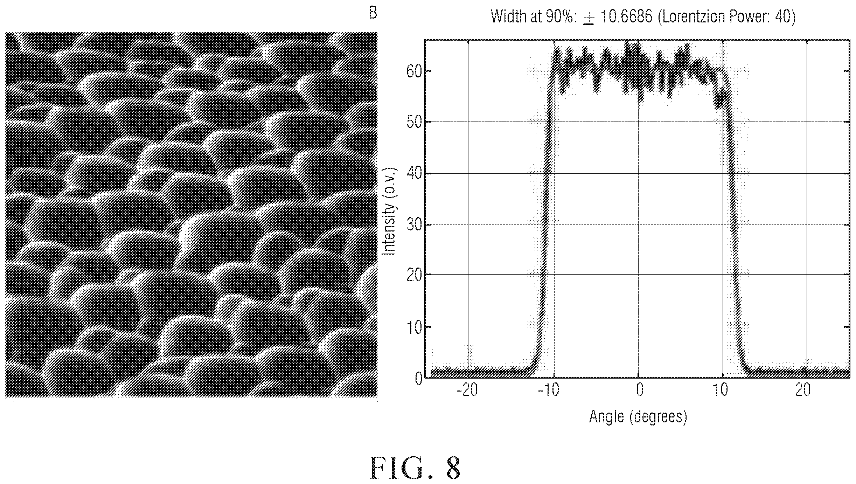

Fig. 7 illustrates a bandwidth limited implementation of an RBM having custom refractive optics which are close to a flat top profile, such that the far field pattern is as close as possible to a flat top profile. The prescription for the set of lenses that comprise the distribution is defined, including feature sizes and slope angles based on the scatter requirements. These parameters may be defined in terms of probability distribution functions that specify the likelihood that a certain lens will assume a specific prescription. A spatial distribution of the microlenses to create the surface structure is designed to create the surface structure according to a desired distribution function. It is appreciated that any underlying periodicity in the spatial distribution of the microlenses may be eliminated in certain example embodiments. Also, lens mismatches may be eliminated, wherein lens mismatches can lead to wide-angle scatter, are eliminated. Both of these improvements maximize the use of available light. Fig. 8 shows an intensity profile exhibiting a much improved super-Lorentzian behavior over the entire range of angles with p = 40, and lens feature sizes ≤ 160 $\mu$m. The careful pseudo randomization of the surface structure also creates a scatter distribution that is devoid of artifacts and induced moiré. This may be significant as regular patterns can introduce additional moiré interference.

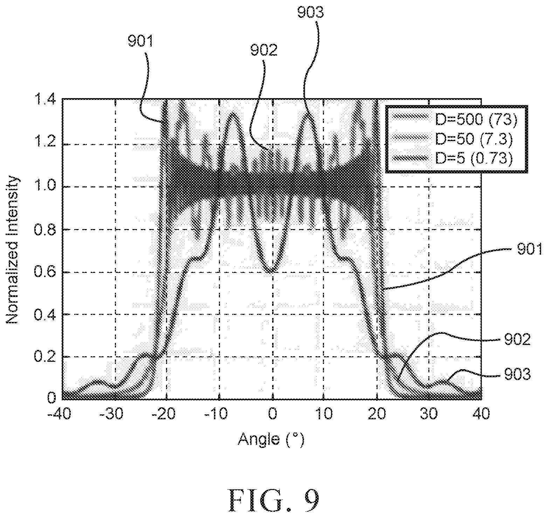

Fig. 9 shows that there is a tradeoff between microlens size and introduced image artifacts. Bigger microlenses will typically have better anti-moiré diffuser profiles. If the microlenses become of a size that are visible to the naked eye, then extra image artifacts will become apparent. These include sparkle, pixel walking and moiré interference between the pattern and either or both LCDs. Fig. 9 illustrates PSF for a single microlens for various values of diameters (um). Curves 901, 902 and 903 represent diameters 500, 50 and 5, respectively. Minimizing feature size may also be utilized in the design of an LCD moiré reduction element. The feature size should ideally be smaller than a sub pixel in order to remain substantially invisible to the naked eye as shown in Fig. 4. In the case where scatter centers take the form of microlenses, the feature size is given by the microlens diameter. In particular, miniature refractive elements are desired. If the microlenses become of a size that are visible to the naked eye then extra image artifacts will become apparent. These include sparkle, pixel walking, and moiré interference between the pattern and either or both LCDs. Sparkle is most often seen in anti-glare displays where the display surface has been treated to produce a matte textured surface. These surface features act as refractive or diffractive elements and can either focus or defocus individual pixel elements depending on the viewer position leading to intensity variations or sparkle. Pixel walking is the result of the refractive distortion appearing to move and distort the individual pixels and the viewer moves position. Extra moiré interference is introduced when regular features in the array of microlens "beat" with one or both of the LCDs. Randomization and reduction of lens size in an RBM or diffuser and placement reduce these extra moiré artifacts. There are two factors to consider in this regard, sag and averaging. To ensure the best uniformity and reduction in moiré, a large number of scatter centers should be illuminated within each pixel area as shown in Fig. 4. At the same time, for a certain set of parameters (e.g., spread angle, index of refraction, and conic constant), the lens depth decreases as the microlens diameter decreases. If the process continues, a diffractive regime is eventually reached where the lens depth only imparts a phase delay that is a small fraction of $2\pi$. In this respect, it is useful to define the phase number in the following equation:

$$M = \frac{y_{max} \Delta n}{\lambda}$$

In the above equation, $y_{max}$ represents the total lens sag, $\lambda$ is the wavelength under consideration, and $\Delta n$ equals n($\lambda$)1, with n the index of refraction at wavelength $\lambda$, for an element in air. The phase number basically expresses the total sag in the language of phase cycles and defines the regime, diffractive or refractive, the microlens operates on: M = 1 implies a diffractive element with exactly $2\pi$ phase shift. In one embodiment, for a microlens to operate in the refractive regime, as is desirable for an achromatic component with high target efficiency, the phase number M should be as large as possible.

Consider again the case of a microlens that scatters a collimated beam with a 40° spread. As the diameter gets smaller the farfield scatter shows coarser oscillations and more sloped falloff, translating into lower target efficiency. A simple rule of thumb to help decide the minimum feature size or lens diameter to utilize is given by the following equation.

$$\theta_0 = \frac{\lambda}{D} \cdot M$$

In the above equation, $\theta_0$ is the half width beam spread angle in degrees (in air). To be well within the refractive regime, M should be around 8 or more. Assuming $\theta = 2°$ and $\lambda = 0.633$ $\mu$m, and M = 8, a result for D $\geq$ 582 $\mu$m is obtained, which is too large compared with a 200 um pixel and will be very visible, degrading the image. Increasing the spread to 20 degree will reduce D by a factor of 10 to 58 $\mu$m. In the above equation, the closer the diffuser is to the back panel, the greater the FWHM angle $\theta_0$. The equation also gives a rule of thumb of microlens diameter to $\theta_0$.

Embedding the refractor in a medium of higher refractive index (PI) such as silicon OCA, rather than air, allows for the effective use of a wider angle refractor, as the higher RI will reduce the refractive power of each microlens. With an RI = 1.42, $\theta_0$ equates to an angle of $\theta =~11°$ or by the above referenced equation, D $\geq$ 105 $\mu$m which is more acceptable. In one embodiment, embedding in high RI material effectively reduces the microlens diameter, which results in less image artifacts. Specifically, replacing the air between the two panels with an indexed matched medium will also allow smaller divergence angles as measured in air and thus smaller microlens diameters.

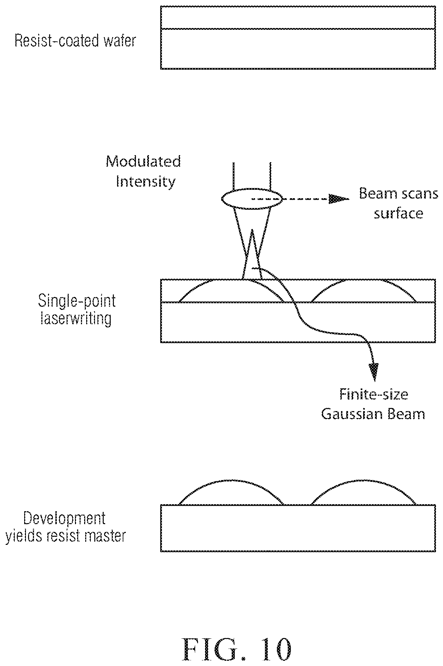

Fig. 10 shows the fabrication process of an RBM, in accordance with one embodiment of the present disclosure in the above respects, including the formation of microlenses on a wafer support. The RBM may be embedded in high RI material to reduce Fresnel depolarization, in order to improve image contrast of the MLD.

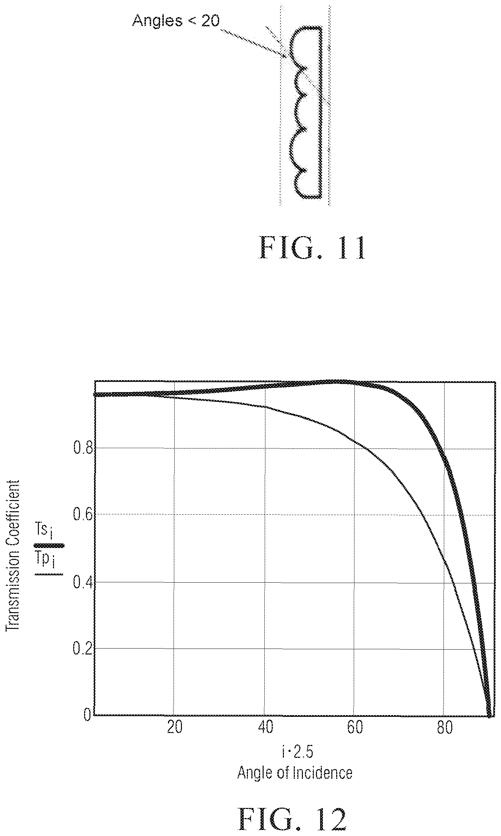

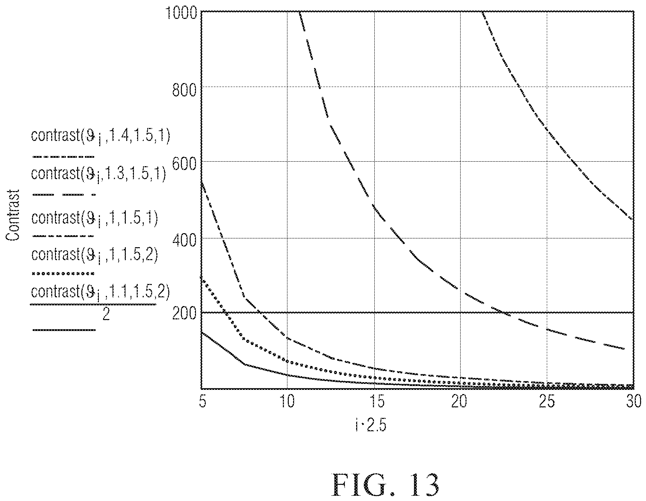

Fig. 11 shows a microlens surface, which typically has a distribution of surface normals between 0 and approximately 20 degrees. The distribution of surface normals leads to contrast reduction because S and P polarizations are transmitted with different attenuations. Fig. 12 shows curves illustrating the transmission coefficient for S and P waves vs. angle of incidence, and Fig. 13 shows system contrast (contrast($\theta$i, n1, n2, N)), wherein $\theta$i is the angle of incidence, n1 is the refractive index of the material between LCDs, n2 is the refractive index of glass, and N is the number of interfaces. As shown the line to the far right with the RI at 1.4 and 1.5 shows the best contrast as the Fresnel depolarization is the least.

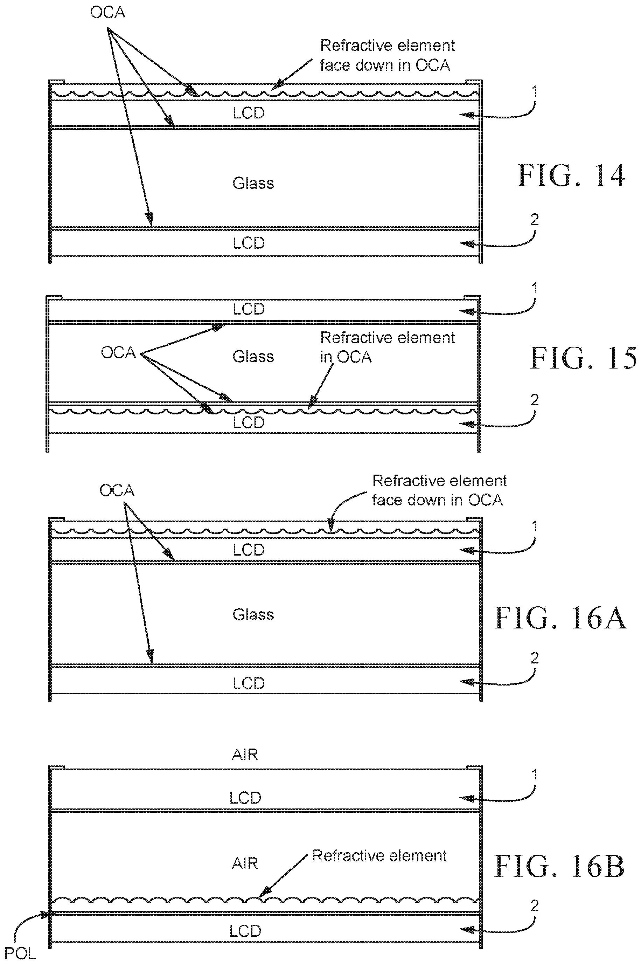

Figs. 14-16 show various placements of the moiré reduction element (e.g., refractive element such as RBM). In Figs. 14 and 16A for example, the moiré reduction element could be positioned on the top surface of the front display 1 as a laminatable film with the patterned surface facing downwards to get the feature size small, as previously described. FIG. 16A shows, for example, the moiré reduction element positioned facing up in optical coupling adhesive (OCA). In some embodiments, the cover glass may be bonded to OCA. FIG. 16B shows another example of the placement of the refractive element. Light is absorbed by the polarizer if internally reflected by the reflective element.

These embodiments may or may not be used in combination with subpixel compression techniques. In one embodiment, having the patterned surface facing upwards would also act as an anti-glaring mechanism, but it will be necessary to embed in OCA with a refractive index of approximately 1.5 to achieve a feature size smaller than 70 $\mu$m. Alternatively, as shown in Fig. 15, it is also possible to place the moiré reduction element between two LCDs (e.g., laminated to the rear display) where the divergence will be larger, and thus the feature size smaller. Index matching the internal voids with a material of R.I. greater than 1.4 (see OCA) will greatly reduce Fresnel depolarization, thereby improving contrast and reducing reflections. The internal voids index matched with glass and OCA to reduce Fresnel polarization also improve contrast and reduce reflections. In one embodiment, the FWHM width for this implementation may be about 1.8 degrees, with a square profile.

Different factors affect contrast in two polarizer and four polarizer MLD. For instance, four polarizer MLD having two LCDs has excellent contrast performance due to the fact that both LCDs can be switched to the off state as each LCD is a functioning LCD with two polarizers. This is not the case with two polarizer MLD. This is the reason why TN panels yield acceptable contrast in four polarizer implementations, but yield poor results when used in a two polarizer implementation. Therefore, in two polarizer MLD, certain configurations are needed in order to ensure that adequate contrast is achieved especially in the off axis directions. In one embodiment, IPS (In Plane Switching) panels are used, which offer better off axis contrast performance. IPS panels reduces the strong viewing angle dependence of many LCD panels and has higher quality color reproduction improved upon the low-quality color reproduction.

Fresnel refraction affects contrast. The paragraphs below describe techniques for mitigating on contrast by index matching refractive indexes of the media in accordance with certain embodiments of the present invention.

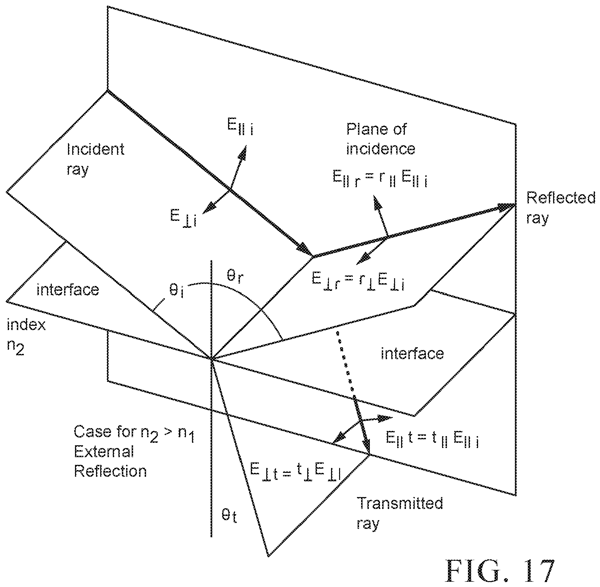

When light moves from a medium of a given refractive index $n_1$ into a second medium with refractive index $n_2$, both reflection and refraction of the light may occur, as shown in FIG. 17. The figure shows the case when n2 > n1 and where external reflection occurs of the incident ray. The incident ray has a $\theta$i angle of incidence at the interface between the medium of n1 refractive index and the medium of n2 refractive index. The corresponding reflected ray has a $\theta$r angle of reflection, and the corresponding transmitted ray has a $\theta$t angle of transmission. The figure also shows the plane of incidence.

The Fresnel equations describe what fraction of the light is reflected and what fraction is refracted (i.e., transmitted). They also describe the phase shift of the reflected light.

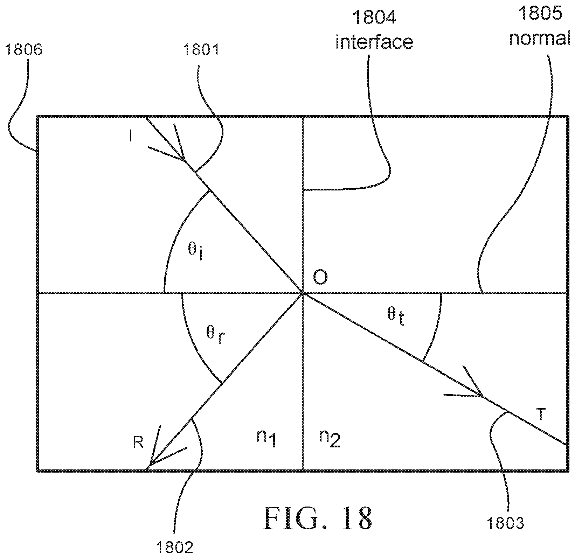

The calculations below depend on polarization of the incident ray. Two cases are analyzed below. In the first case, the incident light is polarized with its electric field perpendicular to the plane containing the incident ray, reflected ray, and refracted rays. This plane is referred to as the plane of incidence. FIG. 18 provides another illustration of the relationship between the incident ray 1801, reflected ray 1802 and the transmitted ray 1803 in the plane of incidence 1806. In the first case, the light is said to be s-polarized, from the German senkrecht ("perpendicular"). In the second case, the incident light is polarized with its electric field parallel to the plane of incidence. Such light is described as p-polarized, from parallel.

In FIG. 18, an incident light ray IO strikes the interface between two media of refractive indices $n_1$ and $n_2$ at point O. Part of the incident ray is reflected as ray OR and part refracted as ray OT. The angles that the incident, reflected and refracted rays make to the normal 1805 of the interface 1804 are given as $\theta i$ , $\theta r$ and $\theta t$ , respectively. The relationship between these angles is given by the law of reflection.

$$\theta_i = \theta_r,$$

and Snell's Law:

$$n_1 \sin \theta_i = n_2 \sin \theta_t.$$

The fraction of the incident power that is reflected from the interface is given by the reflectance or reflectivity R and the fraction that is refracted is given by the transmittance or transmissivity T (note that T is unrelated to the transmission through a medium). Then, the reflectance for s-polarized light becomes:

$$R_s = \left| \frac{n_1 \cos \theta_i - n_2 \cos \theta_t}{n_1 \cos \theta_i + n_2 \cos \theta_t} \right|^2 = \left| \frac{n_1 \cos \theta_i - n_2 \sqrt{1 - \left( \frac{n_1}{n_2} \sin \theta_i \right)^2}}{n_1 \cos \theta_i + n_2 \sqrt{1 - \left( \frac{n_1}{n_2} \sin \theta_i \right)^2}} \right|^2 ,$$

Also, the reflectance for s-polarized light becomes:

$$R_p = \left| \frac{n_1 \cos \theta_t - n_2 \cos \theta_i}{n_1 \cos \theta_t + n_2 \cos \theta_i} \right|^2 = \left| \frac{n_1 \sqrt{1 - \left( \frac{n_1}{n_2} \sin \theta_i \right)^2} - n_2 \cos \theta_i}{n_1 \sqrt{1 - \left( \frac{n_1}{n_2} \sin \theta_i \right)^2} + n_2 \cos \theta_i} \right|^2 .$$

As a consequence of the conservation of energy, the transmittance are given by the following:

$$T_s = 1 - R_s \quad \text{and} \quad T_p = 1 - R_p$$

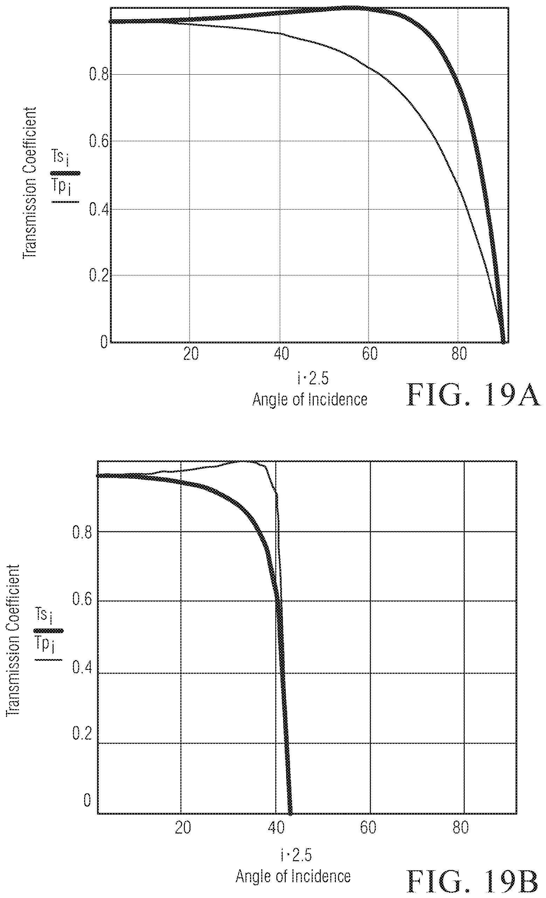

FIG. 19 shows diagrams for transmitted light $T_s$ and $T_p$. FIG. 19B shows light going from a less dense to a more dense medium e.g. from air into glass. It can be seen that light is transmitted for both the S and P waves up to about an angle of incidence of 60 degrees. However note that the transmission of the S and P waves is different, which results in the rotation as talked about below (since the final rotation is the vector sum of the s and p states). Ditto with the second example however this is going from a dense to a less dense medium e.g. glass to air and as such the transmission cuts of completely at ~42 degrees, which is when the material starts totally internally reflecting.

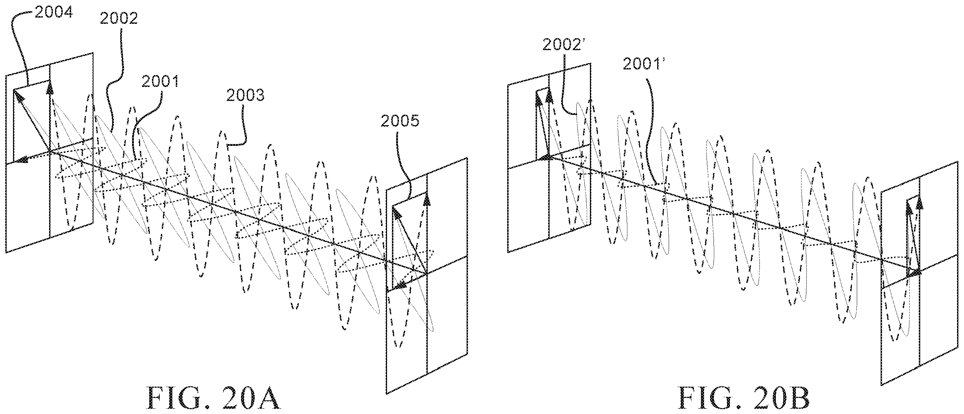

It is not immediately obvious that the differing attenuation of s-polarization and p-polarization rays results in a rotation of the polarization axis. This is illustrated in FIG. 20 where the blue polarization 2002 direction is changed by attenuating the green polarized rays 2001. The attenuated green polarization is shown as 2001' and the blue polarization direction change is shown as 2002'. This rotation can happen at any air glass surface but the effect on contrast is apparent when this happens on the internal MLD surfaces (e.g., 2004 and 2005). The red polarization 2003 is not substantially affected.

The result of this is that light travelling across the glass air interfaces of the LCD's can be transmitted with different attenuation for the s-polarization and p-polarization rays and this can cause the polarization direction to change. When finally passing through the top LCD polarizer the light will cause the brightness to vary depending on viewer position and exit point of the ray.

When considering the LCD black state, all the rays that exit the first LCD will be polarized in the same direction with respect to the display axis. This is not the case when looking at the s-polarization and p-polarization directions, as the frame of reference is governed by the plane of incidence and this plane is dependent on the exit point from the LCD.

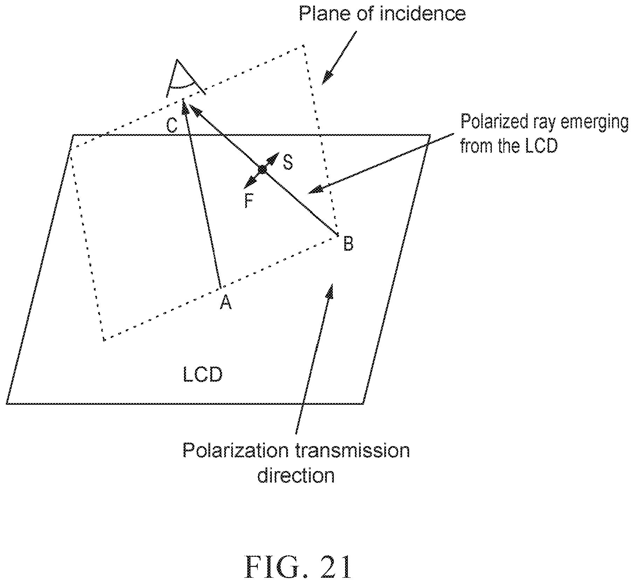

The plane of incidence for any ray entering the observer's eye will be a plane formed by the three points A, B and C where A is the closest point from the eye on the LCD surface, B the ray exit point on the LCD and C the eye. Line AC is normal to the LCD surface, as shown in FIG. 21. This plane is perpendicular to the LCD surface but can be at any angle perpendicular to the LCD surface. The amount of attenuation is dependent on incident angle ACB and also the orientation of line AB to the ray polarization. When AB is parallel or perpendicular to the top polarizer the s-polarization and p-polarization directions are either aligned or not aligned. When AB is parallel to the polarization transmission direction ("TD"), p-polarization is aligned and therefore transmitted, and when AB is perpendicular to TD, s-polarization is aligned and therefore transmitted.

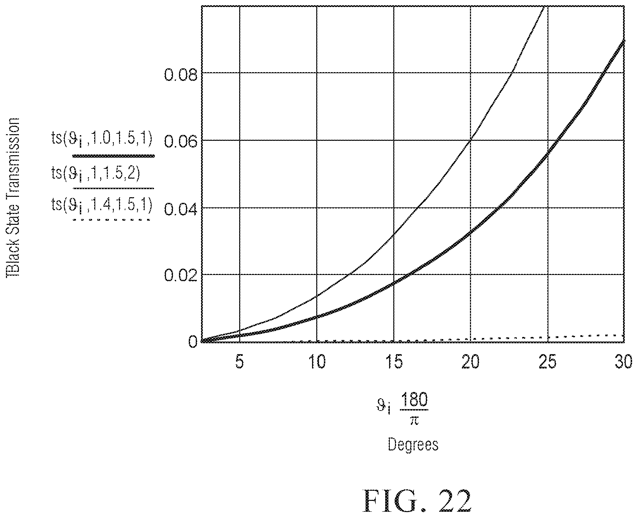

This simplified case is looking at the 45 degree diagonals with the LCD in black state. Here the plane of incidence is at 45 degrees and so the ray has equal magnitudes for s-polarization and p-polarization and ideally no light should leave the LCD. If the rotation change due to the Fresnel attenuation to the s-polarization wave is calculated, the result normalized to 1, where 0 is perfect black and 1 full on, is shown in FIG. 22. The x-axis is the angle ACB on the plane of incidence. The plot of the black state light leakage due to Fresnel effect is shown. At 10 degrees the leakage is approximately 6% for the LCDs alone (middle line) and 12% (top line) if the IC layer is included.

If air inside the LCD (i.e. the air inside the filler material) is replaced with index matching material, it is shown as 1.4 (lower line).

Internal reflections are undesirable as they reduce contrast and affect display quality and clarity. Fresnel reflection are present on any interface between two transparent media if the refractive indices of the two media are different, so it is helpful to index match all media if possible. Also the backplane layer of the LCD is more reflective than the top color plane as the backplane apertures are framed with reflective metallization and the color plane aperture is framed with matt black material. In one embodiment, the top layer is flipped so the reflective metallization is facing upwards. In another embodiment, the top layer is customized so the aperture is framed with matt black material.

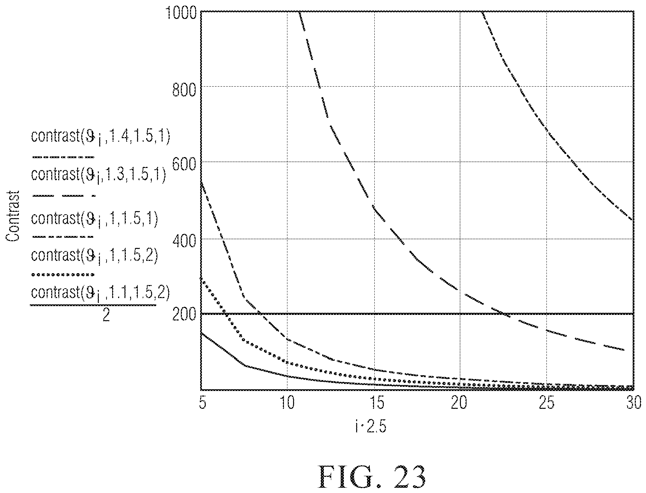

FIG. 23 shows the effective contrast ratio due the Fresnel effects alone with different amount of layers and refractive index materials of 1.0 (air) up to 1.4 (PDMSPolydimethylsiloxane). It can be seen that the air glass interface is a problem causing issues with the contrast and removing the air and replacing with birefringent free index matching material of R.I. greater than or equal to 1.4 greatly improves contrast. Thus, the air may be replaced with a material that has a RI within a certain threshold margin of the RI of the LCD glass. In this example, with glass RI at 1.5, the threshold RI for index matching may be 1.4.

It should also be noted that filling the void between the MLD layers with solid material prevents future dust ingress.

It is noted that light reflecting from the sides of the index matching material, thus introducing regions around the edges of the system with low contrast. This negative visual impact of this effect is according to the invention reduced by making the refractive index matching material wider and higher than the LCD.

While the foregoing disclosure sets forth various embodiments using specific block diagrams, flowcharts, and examples, each block diagram component, flowchart step, operation, and/or component described and/or illustrated herein may be implemented, individually and/or collectively, using a wide range of hardware, software, or firmware (or any combination thereof) configurations. In addition, any disclosure of components contained within other components should be considered as examples because many other architectures can be implemented to achieve the same functionality.

The process parameters and sequence of steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

While various embodiments have been described and/or illustrated herein in the context of fully functional computing systems, one or more of these example embodiments may be distributed as a program product in a variety of forms, regardless of the particular type of computer-readable media used to actually carry out the distribution. The embodiments disclosed herein may also be implemented using software modules that perform certain tasks. These software modules may include script, batch, or other executable files that may be stored on a computer-readable storage medium or in a computing system. These software modules may configure a computing system to perform one or more of the example embodiments disclosed herein. Various functions described herein may be provided through a remote desktop environment or any other cloud-based computing environment.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as may be suited to the particular use contemplated.

**Claims**

1. A multi-layered display device comprising:

   a first display layer (1) in a first plane for displaying a first image, wherein the first display layer is a first liquid crystal display;
   a second display layer (2) in a second plane for displaying a second image, wherein the second display layer is a second liquid crystal display, wherein said first and second planes are approximately parallel to each other;
   a refractive element located on a top surface of the first display layer or between the first and second display layers; and
   an index matching material between the first and second displays, the index matching material having a first refraction index that is higher than a refractive index of air and is from about 1.40 to 1.65,
   **characterized in that** the index matching material is wider and higher than the first liquid crystal display and the second liquid crystal display.

2. The multi-layered display device according to claim 1, wherein the index matching material occupies the entire space between the first and second display layers.

3. The multi-layered display device according to any preceding claim, wherein the first liquid crystal display includes a liquid crystal layer provided between at least first and second glass substrates, at least one of the glass substrates of the first liquid crystal display having a second refractive index, and wherein the first refractive index of said index matching material does not differ from the second refractive index by more than 0.15.

4. The multi-layered display device according to claim 3, wherein the first refractive index of said index matching material does not differ from the second refractive index by more than 0.10.

5. The multi-layered display device according to any of claims 3-4, wherein the second refractive index is about 1.50 to 1.53, and wherein the second refractive index is at least 1.45.

6. The multi-layered display device according to any preceding claim, wherein the index matching material is free of, or substantially free of, birefringence.

7. The multi-layered display device according to any preceding claim, wherein the index matching material consists essentially of, or comprises, polydimethylsiloxane (PDMS).

8. The multi-layered display device according to any preceding claim, wherein the index matching material consists essentially of, or comprises, a silane and/or siloxane.

9. The multi-layered display device according to any preceding claim, wherein the refractive element directly contacts the index matching material to reduce Fresnel depolarization.

10. The multi-layered display device according to any preceding claim, wherein the refractive element is embedded in the index matching material.

**11.** The multi-layered display device according to any preceding claim, wherein the refractive element comprises a plurality of microlenses configured to direct rays output from the second display in a pseudo random manner through sub-pixels of the first display and toward a viewer.

**12.** The multi-layered display device according to claim 11, wherein the microlenses have a distribution of surface normals between 0 and approximately 20 degrees.

**13.** The multi-layered display device according to any of claims 11-12, wherein curved surfaces of the microlenses contact the index matching material.

**14.** The multi-layered display device according to any preceding claim, wherein the refractive element is configured to substantially preserve polarization.

**15.** The multi-layered display device according to any preceding claim, wherein the refractive element is laminated to the first or second display layer.

**16.** The multi-layered display device according to any preceding claim, wherein the second display layer is a rear display, and the first display layer is a front display, of the display device.

**17.** The multi-layered display device according to any preceding claim, wherein the second liquid crystal display includes a liquid crystal layer provided between at least first and second glass substrates, at least one of the glass substrates of the second liquid crystal display having a second refractive index, and wherein the first refractive index of said index matching material does not differ from the second refractive index by more than 0.15.

**18.** A method of forming a multi-layered display device, the method comprising:

> providing a first display layer in a first plane for displaying a first image, wherein the first display layer is a first liquid crystal display, and a second display layer in a second plane for displaying a second image, wherein the second display layer is a second liquid crystal display, wherein said first and second planes are approximately parallel to each other;
> providing a refractive element arranged on a top surface of the first display layer or between the first and second display layers; and
> providing an index matching material between the first and second displays, the index matching material having a first refraction index that is different from a refraction index of air;
> **characterized in that** the index matching material is wider and higher than the first liquid crystal display and the second liquid crystal display.

**19.** The method according to claim 18, wherein the material occupies entire space between the first and second display layers.

**20.** The method according to claim 18, wherein the first and/or second liquid crystal displays have a second refractive index, and wherein the first refractive index is within a predetermined threshold margin from the second refractive index.

**Patentansprüche**

**1.** Mehrschichtige Anzeigevorrichtung, umfassend:

> eine erste Anzeigeschicht (1) in einer ersten Ebene zur Anzeige eines ersten Bildes, wobei die erste Anzeigeschicht eine erste Flüssigkristallanzeige ist;
> eine zweite Anzeigeschicht (2) in einer zweiten Ebene zur Anzeige eines zweiten Bildes, wobei die zweite Anzeigeschicht eine zweite Flüssigkristallanzeige ist, wobei die erste und die zweite Ebene ungefähr parallel zueinander sind;
> ein refraktives Element, das sich auf einer oberen Fläche der ersten Anzeigeschicht oder zwischen der ersten und der zweiten Anzeigeschicht befindet; und
> ein Indexanpassungsmaterial zwischen der ersten und der zweiten Anzeige, wobei das Indexanpassungsmaterial einen ersten Brechungsindex aufweist, der höher ist als ein Brechungsindex von Luft und zwischen etwa 1,40 und 1,65 liegt,
**dadurch gekennzeichnet, dass** das Indexanpassungsmaterial breiter und höher ist als die erste Flüssigkristallanzeige und die zweite Flüssigkristallanzeige.

2. Mehrschichtige Anzeigevorrichtung nach Anspruch 1, wobei das Indexanpassungsmaterial den gesamten Raum zwischen der ersten und der zweiten Anzeigeschicht einnimmt.

3. Mehrschichtige Anzeigevorrichtung nach einem der vorhergehenden Ansprüche, wobei die erste Flüssigkristallanzeige eine Flüssigkristallschicht enthält, die zwischen mindestens einem ersten und einem zweiten Glassubstrat vorgesehen ist, wobei mindestens eines der Glassubstrate der ersten Flüssigkristallanzeige einen zweiten Brechungsindex aufweist, und wobei der erste Brechungsindex des Indexanpassungsmaterials sich von dem zweiten Brechungsindex um nicht mehr als 0,15 unterscheidet.

4. Mehrschichtige Anzeigevorrichtung nach Anspruch 3, wobei sich der erste Brechungsindex des Indexanpassungsmaterials um nicht mehr als 0,10 von dem zweiten Brechungsindex unterscheidet.

5. Mehrschichtige Anzeigevorrichtung nach einem der Ansprüche 3 bis 4, wobei der zweite Brechungsindex etwa 1,50 bis 1,53 beträgt, und wobei der zweite Brechungsindex mindestens 1,45 beträgt.

6. Mehrschichtige Anzeigevorrichtung nach einem der vorhergehenden Ansprüche, wobei das Indexanpassungsmaterial frei oder im Wesentlichen frei von Doppelbrechung ist.

7. Mehrschichtige Anzeigevorrichtung nach einem der vorhergehenden Ansprüche, wobei das Indexanpassungsmaterial im Wesentlichen aus Polydimethylsiloxan (PDMS) besteht oder dieses umfasst).

8. Mehrschichtige Anzeigevorrichtung nach einem der vorhergehenden Ansprüche, wobei das Indexanpassungsmaterial im Wesentlichen aus einem Silan und/oder Siloxan besteht oder ein solches umfasst.

9. Mehrschichtige Anzeigevorrichtung nach einem der vorhergehenden Ansprüche, wobei das refraktive Element direkt mit dem Indexanpassungsmaterial in Kontakt steht, um die Fresnelsche Depolarisation zu verringern.

10. Mehrschichtige Anzeigevorrichtung nach einem der vorhergehenden Ansprüche, wobei das refraktive Element in das Indexanpassungsmaterial eingebettet ist.

11. Mehrschichtige Anzeigevorrichtung nach einem der vorhergehenden Ansprüche, wobei das refraktive Element eine Vielzahl von Mikrolinsen umfasst, die so konfiguriert sind, dass sie Strahlen, die von der zweiten Anzeige ausgegeben werden, in einer pseudozufälligen Weise durch Teilpixel der ersten Anzeige und in Richtung eines Betrachters lenken.

12. Mehrschichtige Anzeigevorrichtung nach Anspruch 11, wobei die Mikrolinsen eine Verteilung der Oberflächennormalen zwischen 0 und etwa 20 Grad aufweisen.

13. Mehrschichtige Anzeigevorrichtung nach einem der Ansprüche 11 bis 12, wobei gekrümmte Oberflächen der Mikrolinsen mit dem Indexanpassungsmaterial in Kontakt stehen.

14. Mehrschichtige Anzeigevorrichtung nach einem der vorhergehenden Ansprüche, wobei das refraktive Element so konfiguriert ist, dass eine Polarisation im Wesentlichen erhalten bleibt.

15. Mehrschichtige Anzeigevorrichtung nach einem der vorhergehenden Ansprüche, wobei das refraktive Element auf die erste oder zweite Anzeigeschicht laminiert ist.

16. Mehrschichtige Anzeigevorrichtung nach einem der vorhergehenden Ansprüche, wobei die zweite Anzeigeschicht eine hintere Anzeige und die erste Anzeigeschicht eine vordere Anzeige der Anzeigevorrichtung ist.

17. Mehrschichtige Anzeigevorrichtung nach einem der vorhergehenden Ansprüche, wobei die zweite Flüssigkristallanzeige eine Flüssigkristallschicht enthält, die zwischen mindestens einem ersten und einem zweiten Glassubstrat vorgesehen ist, wobei mindestens eines der Glassubstrate der zweiten Flüssigkristallanzeige einen zweiten Brechungsindex aufweist, und wobei der erste Brechungsindex des Indexanpassungsmaterials sich von dem zweiten Brechungsindex um nicht mehr als 0,15 unterscheidet.

**18.** Verfahren zur Herstellung einer mehrschichtigen Anzeigevorrichtung, wobei das Verfahren umfasst:

Bereitstellen einer ersten Anzeigeschicht in einer ersten Ebene zur Anzeige eines ersten Bildes, wobei die erste Anzeigeschicht eine erste Flüssigkristallanzeige ist, und einer zweiten Anzeigeschicht in einer zweiten Ebene zur Anzeige eines zweiten Bildes, wobei die zweite Anzeigeschicht eine zweite Flüssigkristallanzeige ist, wobei die erste und die zweite Ebene ungefähr parallel zueinander sind;
Bereitstellen eines refraktiven Elements, das auf der oberen Fläche der ersten Anzeigeschicht oder zwischen der ersten und der zweiten Anzeigeschicht angeordnet ist; und
Bereitstellen eines Indexanpassungsmaterials zwischen der ersten und der zweiten Anzeige, wobei das Indexanpassungsmaterial einen ersten Brechungsindex aufweist, der sich von einem Brechungsindex von Luft unterscheidet;
**dadurch gekennzeichnet, dass** das Indexanpassungsmaterial breiter und höher ist als die erste Flüssigkristallanzeige und die zweite Flüssigkristallanzeige.

**19.** Verfahren nach Anspruch 18, wobei das Material den gesamten Raum zwischen der ersten und der zweiten Anzeigeschicht einnimmt.

**20.** Verfahren nach Anspruch 18, wobei die erste und/oder die zweite Flüssigkristallanzeige einen zweiten Brechungsindex aufweisen und wobei der erste Brechungsindex innerhalb einer vorbestimmten Schwellenspanne zum zweiten Brechungsindex liegt.

**Revendications**

**1.** Dispositif d'affichage multicouche, comprenant :

une première couche d'affichage (1) dans un premier plan pour afficher une première image, dans lequel la première couche d'affichage est un premier affichage à cristaux liquides ;
une deuxième couche d'affichage (2) dans un deuxième plan pour afficher une deuxième image, dans lequel la deuxième couche d'affichage est un deuxième affichage à cristaux liquides, dans lequel lesdits premier et deuxième plans sont approximativement parallèles l'un à l'autre ;
un élément réfringent situé sur une surface supérieure de la première couche d'affichage ou entre les première et deuxième couches d'affichage ; et
un matériau d'adaptation d'indice entre les premier et deuxième affichages, le matériau d'adaptation d'indice ayant un premier indice de réfraction qui est supérieur à un indice de réfraction de l'air et est compris entre environ 1,40 et 1,65,
**caractérisé en ce que** le matériau d'adaptation d'indice est plus large et plus haut que le premier affichage à cristaux liquides et le deuxième affichage à cristaux liquides.

**2.** Dispositif d'affichage multicouche selon la revendication 1, dans lequel le matériau d'adaptation d'indice occupe la totalité de l'espace entre les première et deuxième couches d'affichage.

**3.** Dispositif d'affichage multicouche selon l'une quelconque des revendications précédentes, dans lequel le premier affichage à cristaux liquides inclut une couche de cristaux liquides prévue entre au moins un premier et un deuxième substrat de verre, au moins l'un des substrats de verre du premier affichage à cristaux liquides ayant un deuxième indice de réfraction, et dans lequel le premier indice de réfraction dudit matériau d'adaptation d'indice ne diffère pas du deuxième indice de réfraction de plus de 0,15.

**4.** Dispositif d'affichage multicouche selon la revendication 3, dans lequel le premier indice de réfraction dudit matériau d'adaptation d'indice ne diffère pas du deuxième indice de réfraction de plus de 0,10.

**5.** Dispositif d'affichage multicouche selon l'une quelconque des revendications 3 à 4, dans lequel le deuxième indice de réfraction est compris entre environ 1,50 et 1,53, et dans lequel le deuxième indice de réfraction est d'au moins 1,45.

**6.** Dispositif d'affichage multicouche selon l'une quelconque des revendications précédentes, dans lequel le matériau d'adaptation d'indice est exempt, ou sensiblement exempt, de biréfringence.

7. Dispositif d'affichage multicouche selon l'une quelconque des revendications précédentes, dans lequel le matériau d'adaptation d'indice consiste essentiellement en, ou comprend, du polydiméthylsiloxane (PDMS).

8. Dispositif d'affichage multicouche selon l'une quelconque des revendications précédentes, dans lequel le matériau d'adaptation d'indice consiste essentiellement en, ou comprend, un silane et/ou un siloxane.

9. Dispositif d'affichage multicouche selon l'une quelconque des revendications précédentes, dans lequel l'élément réfringent est directement en contact avec le matériau d'adaptation d'indice pour réduire la dépolarisation de Fresnel.

10. Dispositif d'affichage multicouche selon l'une quelconque des revendications précédentes, dans lequel l'élément réfringent est incorporé dans le matériau d'adaptation d'indice.

11. Dispositif d'affichage multicouche selon l'une quelconque des revendications précédentes, dans lequel l'élément réfringent comprend une pluralité de microlentilles configurées pour diriger les rayons émis par le deuxième affichage d'une manière pseudo-aléatoire à travers des sous-pixels du premier affichage et vers un observateur.

12. Dispositif d'affichage multicouche selon la revendication 11, dans lequel les microlentilles ont une distribution de normales à la surface comprise entre 0 et environ 20 degrés.

13. Dispositif d'affichage multicouche selon l'une quelconque des revendications 11 à 12, dans lequel des surfaces incurvées des microlentilles sont en contact avec le matériau d'adaptation d'indice.

14. Dispositif d'affichage multicouche selon l'une quelconque des revendications précédentes, dans lequel l'élément réfringent est configuré pour préserver sensiblement la polarisation.

15. Dispositif d'affichage multicouche selon l'une quelconque des revendications précédentes, dans lequel l'élément réfringent est laminé sur la première ou la deuxième couche d'affichage.

16. Dispositif d'affichage multicouche selon l'une quelconque des revendications précédentes, dans lequel la deuxième couche d'affichage est un affichage arrière, et la première couche d'affichage est un affichage avant, du dispositif d'affichage.

17. Dispositif d'affichage multicouche selon l'une quelconque des revendications précédentes, dans lequel le deuxième affichage à cristaux liquides inclut une couche de cristaux liquides prévue entre au moins un premier et un deuxième substrat de verre, au moins l'un des substrats de verre du deuxième affichage à cristaux liquides ayant un deuxième indice de réfraction, et dans lequel le premier indice de réfraction dudit matériau d'adaptation d'indice ne diffère pas du deuxième indice de réfraction de plus de 0,15.

18. Procédé de formation d'un dispositif d'affichage multicouche, le procédé comprenant les étapes consistant à :

fournir une première couche d'affichage dans un premier plan pour afficher une première image, dans lequel la première couche d'affichage est un premier affichage à cristaux liquides, et une deuxième couche d'affichage dans un deuxième plan pour afficher une deuxième image, dans lequel la deuxième couche d'affichage est un deuxième affichage à cristaux liquides, dans lequel lesdits premier et deuxième plans sont approximativement parallèles l'un à l'autre ;
fournir un élément réfringent disposé sur une surface supérieure de la première couche d'affichage ou entre les première et deuxième couches d'affichage ; et
fournir un matériau d'adaptation d'indice entre les premier et deuxième affichages, le matériau d'adaptation d'indice ayant un premier indice de réfraction qui est différent d'un indice de réfraction de l'air ;
**caractérisé en ce que** le matériau d'adaptation d'indice est plus large et plus haut que le premier affichage à cristaux liquides et le deuxième affichage à cristaux liquides.

19. Procédé selon la revendication 18, dans lequel le matériau occupe la totalité de l'espace entre les première et deuxième couches d'affichage.

20. Procédé selon la revendication 18, dans lequel le premier et/ou le deuxième affichage à cristaux liquides ont un deuxième indice de réfraction, et dans lequel le premier indice de réfraction se situe dans une marge de seuil prédéterminée par rapport au deuxième indice de réfraction.

FIG. 1

FIG. 2

FIG. 3

FIG. 4

FIG. 5

Viewer

| AR Polariser |
|---|
| (1/4) Wave Retarder |

AR system

| Front Polariser |
|---|
| Glass |
| LCD Backplane (reflective) |
| Liquid Crystal |
| Color Filter Layer |
| Glass |

Display layer 1

Air Gap/Clear Filler Material

| RBM/diffraction/diffusion |
|---|

Air Gap/Clear Filler Material

Gap

| Glass |
|---|
| Color Filter Layer |
| Liquid Crystal |
| LCD Backplane (reflective) |
| Glass |
| Rear Polariser |

Display layer 2

# FIG. 6

FIG. 7

FIG. 8

FIG. 9

Resist-coated wafer

Modulated
Intensity

Beam scans
surface

Single-point
laserwriting

Finite-size
Gaussian Beam

Development
yields resist master

FIG. 10

Angles < 20

## FIG. 11

Transmission Coefficient

$$\frac{Ts_i}{Tp_i}$$

0.8

0.6

0.4

0.2

0

20    40    60    80

i·2.5
Angle of Incidence

## FIG. 12

FIG. 13

FIG. 14

FIG. 15

FIG. 16A

FIG. 16B

FIG. 17

FIG. 18

FIG. 19A

FIG. 19B

FIG. 20A

FIG. 20B

EP 3 622 348 B1

FIG. 21

FIG. 22

FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150323805 A1
- US 20160012630 A
- US 20170131558 A1
- US 20150152294 A1